# EUROPÄISCHE PATENTSCHRIFT

(11) **EP 1 215 120 B1**
(45) Veröffentlichungstag und Bekanntmachung des Hinweises auf die Patenterteilung: **18.08.2004**
(21) Anmeldenummer: 01127702.7
(22) Anmeldetag: 21.11.2001
(51) Int. Cl.: B64G 1/64, B64G 1/00

(54) **Separationsrahmen zur Trennung mehrerer axial angeordneter Satelliten**
Separation frame for the deployment of several axially arranged satellites
Cadre de séparation pour le déploiement de plusieurs satellites arrangés axialement

(30) Priorität: 12.12.2000 DE 10061773
(43) Veröffentlichungstag der Anmeldung: 19.06.2002
(73) Patentinhaber: EADS Astrium GmbH, 81663 München (DE)
(72) Erfinder: Kroeker, Jürgen, 88677 Markdorf (DE)
(74) Vertreter: Ulrich, Thomas

(56) Entgegenhaltungen:
- DE-A- 4 243 562
- US-A- 5 605 308
- US-A- 5 860 624

## Beschreibung

Konstellationen von Satelliten gewinnen in allen Anwendungsbereichen, wie Kommunikation, Navigation und Wissenschaft immer mehr Bedeutung. Um die Startkosten niedrig zu halten, werden immer mehr Mehrfachstarts durchgeführt. Zur Zeit sind Mehrfachstarts in separaten Strukturen wie bei ARIANE/SOYUZ oder mit zwei und mehreren Satelliten, die lateral um einen Adapter angeordnet sind üblich (Globalstar). Diese Anordnung lässt eine laterale Separation der Satelliten zu. Neuere Satelliten wie Teledesic und TerraSar verlangen aufgrund ihrer geometrischen Vorgaben (z.B. Antennengröße) eine parallel, achsiale Anordnung mehrerer Satelliten auf einem Adapter.

Zur Separation der axial angeordneten Satelliten gibt es mehrere Möglichkeiten:
1. Gleichzeitige Separation der Satelliten vom Adapter. Dabei ergeben sich zwei Probleme: die Separation muss tatsächlich zeitgleich erfolgen und die Massen der Satelliten müssen identisch sein. Selbst bei einer leichten Schrägstellung der Separationsrichtung (nach aussen) bleiben die Satelliten sehr dicht zusammen, es besteht Kollisionsgefahr.
2. Zeitgleich versetzte Separation der Satelliten vom Adapter. Dabei entsteht während der Separation ein Moment auf dem verbleibenden Körper (Adapter, Oberstufe und verbleibende(r) Satellit(en), da die Wirkungslinie der Separationskräfte nicht durch den Schwerpunkt des verbleibenden Körpers geht. Das resultierende Moment bewirkt auf dem verbleibenden Körper eine Rotation, die zur Kollision mit dem separierenden Satelitten führen kann.

Aus US 5 860 624 ist es bekannt, einen oder mehrere Satelliten mittels zweier Klemmringe pro Satellit am Raketen-Adapter anzubringen. Die Klemmringe sind die mittels eines Gelenks miteinander verbunden sind. Beide Ringe sind übereinanderliegend angeordnet. Mittels Federkraft und des Gelenks wird der zu startende Satellit in eine geschwenkte Lage gebracht und gestartet. Die beiden übereinanderliegenden Klemmringe müssen so dimensioniert werden, dass jeder die gesamten Kräfte während der Startphase aufnehmen und weiterleiten kann.

Aufgabe der Erfindung ist es, einen Separationsrahmen zu schaffen, der die Kräfte in der Startphase sicher aufnimmt und bei geringem Eigengewicht des Rahmens eine problemlose Separation der Satelliten ermöglicht. Diese Aufgabe wird durch den Hauptanspruch gelöst. Die Unteransprüche betreffen vorteilhafte Ausgestaltungen der Erfindung.

Die Erfindung wird nachfolgend anhand von Figuren näher erläutert:
Es zeigen:

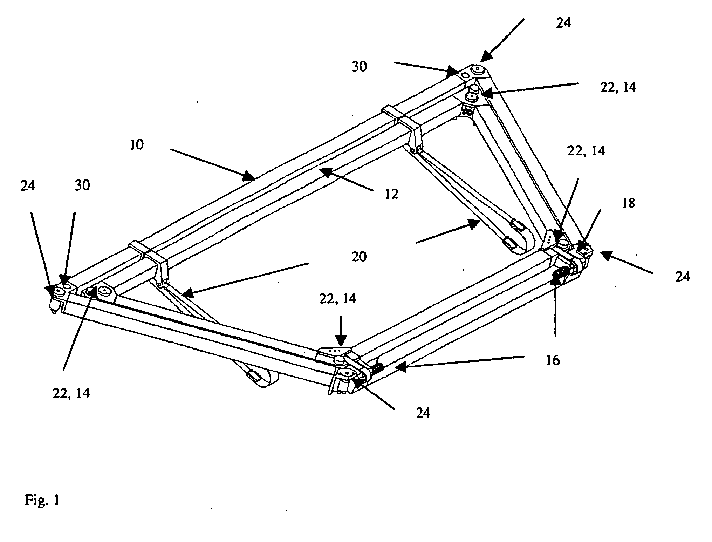

- Fig. 1: einen erfindungsgemässen Separationsrahmen in axonometrischer Darstellung,

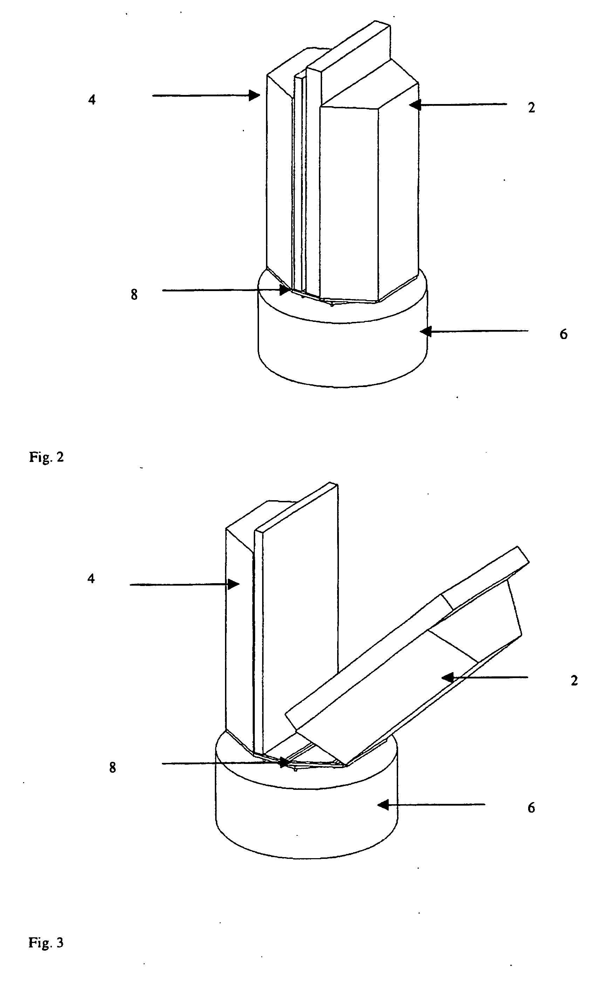

- Fig. 2: die prinzipielle Darstellung von zwei Satelliten auf einem Raketenadapter,
- Fig. 3: die Ausrichtung eines Satelliten in Separationsrichtung,

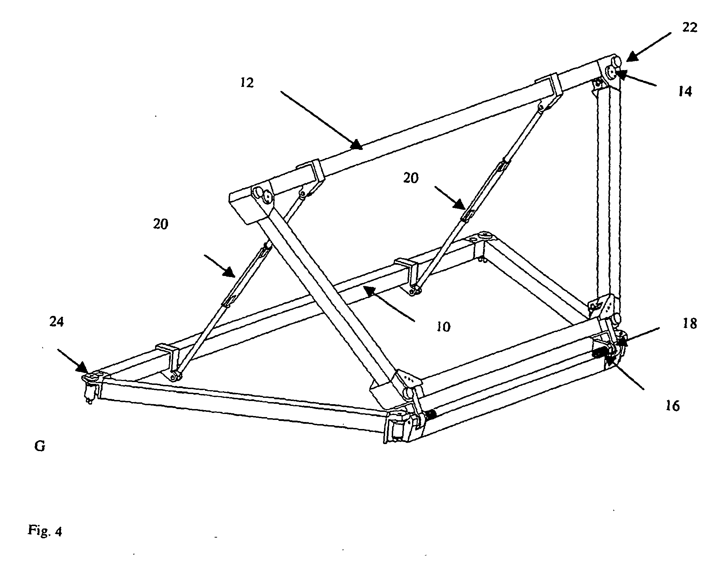

- Fig. 4: eine vergrösserte Darstellung von Details der Fig. 3.

Zwischen jedem Satelliten 2, 4 und dem Raketenadapter 6 befindet sich ein Separationsrahmen 8. Dieser Separationsrahmen 8 besteht aus folgenden Bauelementen:
- äusserer Rahmen 10 und innerer Rahmen 12
- Separationsfedern 14 (zwischen innerem Rahmen und Satelliten)
- Antrieb 16 (z.B. vorgespannte Feder, E-Motor; Parafin-Motor) des inneren Rahmens
- Gelenk 18 (kann auch im Antrieb integriert sein)
- Arretierung 20
- Zusätzliche Separationsbolzen 22 zwischen innerem Rahmen 12 und Satelliten 2, 4.

Der Separationsrahmen 8 besteht aus zwei gegeneinander beweglichen Rahmen 10, 12. Der grössere, äussere Rahmen 10 wird mit dem Launcher Interface verbunden. Der kleinere, innere Rahmen 12 ist gelenkig am grösseren Rahmen 10 gelagert und dreht den Satellit in die gewünschte Trennposition, in welcher der Rahmen von einer Verriegelung gehalten wird.

### Montage des Satelliten und Separationsrahmens:

Der komplette Rahmen 8, bestehend aus innerem Rahmen 12 und äusserem Rahmen 10, kann vorintegriert werden:
Der vorintegrierte Rahmen 8 wird mit einem zentral oder mehreren Separationenbolzen 22 am Satelliten 2, 4 montiert.
Satellit und Rahmen 8 werden mit dem Satellitenseparationsbolzen 24 auf den Raketenadapter 6 montiert.
Gelenk 18, Antrieb 16 und Arretierung 20 werden auf den Raketenadapter 6 montiert.

### Funktion:

Während der Startphase werden die Startkräfte des Satelliten über die Satellitenseparationsbolzen 24 durch den äusseren Separationsrahmen 10 direkt in den Raketenadapter 6 geleitetet. Der innere Separationsrahmen 12 ist in dieser Phase zwischen Raketenadapter 6 und Satellit 2, 4 und funktionslos.

### Die Separation des Satelliten 2 erfolgt in mehreren Stufen:

1. Die Satellitenseparationsbolzen 24 zwischen Raketenadapter 6 und Satellit 2 werden gezündet. Dadurch wird die Verbindung von Satellit 2 und Separationsrahmen 10 zum Raketenadapter 6 freigegeben. Der innere Separationsrahmen 12 ist noch am Satelliten 2 mit zusätzlichen Separationsbolzen 22 befestigt und über das Gelenk 18 mit dem Raketenadapter 6 verbunden.
2. Der innere Separationsrahmen 12 rotiert um seine Drehachse und wird in der Endstellung arretiert. Die Rotation kann bei einer vorgespannten Feder 16 automatisch erfolgen. Bei einem Elektromotor oder einem Parafin-Motor muss dieser separat angesteuert werden. Die Drehachse und der Aufstellwinkel werden so gewählt, dass der Schwerpunkt des Satelliten 2 und des verbleibenden Körpers 4 ,6 auf der Linie der Separationsrichtung liegen. Die Arretierung kann mittels eines Mechanismus oder einer "C-Feder" 20 erfolgen.
3. Der oder die Separationsbolzen 22 zwischen dem inneren Separatonsrahmen 12 und dem Satellit 2 werden gezündet und der Satellit 2 wird durch die vorgespannten Separationsfedern 14 abgedrückt.

### Vorteile des beschriebenen Verfahrens:

- Weder der separierende Satellit 2 noch die zurückbleibenden Körper 4,6 erfahren eine Rotation während der Separation.
- Die gewählte Ausrichtung zur Sonne und Erde bleibt damit für alle Satelliten erhalten.
- Der Aufwand zur Stabilisierung der Satelliten wird minimal.
- Es besteht keinerlei Gefahr für eine Kollision.
- Die Separation von mehreren Satelliten kann zeitlich so gestaffelt werden, dass eine einfache Kontrolle jedes Satelliten vom Boden aus möglich ist.
- Eigenfrequenzen und Startlasten werden durch den Separationsrahmen nicht verändert.
- Es können beliebig viele Satelliten nacheinander separiert werden.

### Funktionsweise:

Beide Rahmen 10, 12 sind an jeweils einem Satelliten 2, 4 mit Separationsmechanismen angeschraubt. Die beiden Rahmen sind durch zwei einachsige Drehgelenke 18 miteinander verbunden. Nach dem Ausklappen des inneren Rahmens 12 wird die Endposition durch einen Verriegelungsmechanismus 20 sichergestellt.
Am äusseren Rahmen 10 sitzen in den vier Eckpunkten große Separation-Bolzen 24, welche die Startlasten des Satelliten zum Launcher Interface übertragen.

Im äusseren Rahmens 10, den Gelenken gegenüber, befinden sich Kick-Federn 30, welche nach der Aktivierung der großen Separation-Bolzen 24 dem Satelliten 2 einen Impuls geben und somit die Rotation von Anfang an unterstützen. An den vorderen Eckprofilen des äusseren Rahmens sind die Gelenke 18 und Drehfedern 36 für die Rotation des inneren Rahmens befestigt.

Der Satellit ist mit Separation-Bolzen 22 am inneren, drehbaren Rahmen 12 befestigt. In den Eckprofilen mit den Separation-Bolzen 22 befinden sich auch die Separationsfedern 14, die den Satelliten 2 nach dem Trennen der kleinen Separation-Bolzen 22 mit einer definierten Geschwindigkeit vom Rahmen in Bewegung setzen.
Pro Satellite ist ein Separationsrahmen erforderlich.
Zusammengefasst ist folgender Ablauf gegeben:
- Separation des äußeren Rahmens vom Launcher durch Aktivieren der Separation-Bolzen.
- Start des Ausklappens des inneren Rahmens durch Kick-Federn und Drehfedern.
- Endpositionssicherung durch Verriegelungmechanismus.
- Trennen des Satelliten vom innerem Rahmen durch Aktivieren der Separation-Bolzen.
- Separations-Federn bewegen den Satelliten vom inneren Rahmen fort.

## Patentansprüche

1. Separationsrahmen für Satelliten, bestehend aus zwei Rahmen (10, 12) die mittels eines Gelenks (18) miteinander verbunden sind, **dadurch gekennzeichnet, daß** die zwei Rahmen (10, 12) kongruent und ineinanderliegend angeordnet sind.

2. Separationsrahmen für Satelliten nach Anspruch 1, **gekennzeichnet durch** einen äusseren Rahmen (10) und einen inneren Rahmen (12), wobei der innere Rahmen (12) mittels eines Gelenks (18) am äusseren Rahmen (10) befestigt ist und der innere Rahmen (12) um die Drehachse verschwenkbar ist, sodaß die finale Separationsrichtung **durch** den Schwerpunkt des verbleibenden Körpers verläuft.

3. Separationsrahmen nach Ansprüchen 1-2, **dadurch gekennzeichnet, dass** der Rahmen (10) und der innere Rahmen (12) jeweils die Form des Satelliten Interfaces haben.

## Claims

1. A separation frame for satellites, consisting of two frames (10, 12) which are connected to one another by means of a hinge (18), **characterised in that** the two frames (10, 12) are congruent and arranged one inside the other.

2. Separation frame for satellites according to Claim 1, **characterised by** an outer frame (10) and an inner frame (12), the inner frame (12) being fastened to the outer frame (10) by means of a hinge (18), and the inner frame (12) being capable of pivoting about the axis of rotation, so that the final direction of separation passes through the centre of gravity of the remaining body.

3. Separation frame according to Claims 1-2, **characterised in that** the frame (10) and the inner frame (12) each have the shape of the satellite interface.

## Revendications

1. Cadre de séparation pour satellites, comprenant deux cadres (10, 12) qui sont reliés entre eux au moyen d'une articulation (18), **caractérisé en ce que** les deux cadres (10, 12) sont disposés de façon congruente et emboîtée l'un dans l'autre.

2. Cadre de séparation pour satellites selon la revendication 1, **caractérisé par** un cadre (10) extérieur et d'un cadre (12) intérieur, le cadre (12) intérieur étant fixé au moyen d'une articulation (18) sur le cadre (10) extérieur et le cadre (12) intérieur pouvant basculer autour de l'axe de rotation, de sorte que le sens de séparation final passe par le centre de gravité du corps restant.

3. Cadre de séparation selon les revendications 1 à 2, **caractérisé en ce que** le cadre (10) et le cadre (12) intérieur ont respectivement la forme de l'interface de satellite.
